**Europäisches Patentamt**

**European Patent Office**

**Office européen des brevets**

(19)

(11) Veröffentlichungsnummer: **0 226 914**
**B1**

(12) # EUROPÄISCHE PATENTSCHRIFT

(45) Veröffentlichungstag der Patentschrift:
25.01.89

(51) Int. Cl.⁴: **B 60 K 11/04**

(21) Anmeldenummer: **86116965.4**

(22) Anmeldetag: **06.12.86**

(54) **Kühler-Befestigung für Brennkraftmaschinen, insbesondere in Kraftfahrzeugen.**

(30) Priorität: **19.12.85 DE 3545141**

(43) Veröffentlichungstag der Anmeldung:
**01.07.87 Patentblatt 87/27**

(45) Bekanntmachung des Hinweises auf die Patenterteilung:
**25.01.89 Patentblatt 89/4**

(84) Benannte Vertragsstaaten:
**DE ES FR GB IT SE**

(56) Entgegenhaltungen:
**EP-A-0 126 855**
**EP-A-0 132 844**
**DE-A-2 634 990**
**DE-A-3 608 898**
**FR-A-2 561 998**
**US-A-4 579 184**

(73) Patentinhaber: **BAYERISCHE MOTOREN WERKE Aktiengesellschaft, Postfach 40 02 40, D-8000 München 40 (DE)**

(72) Erfinder: **Brielmair, Martin, Am Weiher 25, D-8058 Langengeisling (DE)**

(74) Vertreter: **Schweiger, Erwin, c/o Bayerische Motoren Werke AG - AJ- 35 Postfach 40 02 40 Petuelring 130, D-8000 München 40 (DE)**

## Beschreibung

Die Erfindung bezieht sich auf eine Kühler-Befestigung für Brennkraftmaschinen, insbesondere in Kraftfahrzeugen, einer Bauart mit den Merkmalen gemäß dem Oberbegriff des Patentanspruches 1.

Eine bekannte Kühler-Befestigung dieser Bauart gemäß DE-A-2 634 990 enthält untere und obere Konsolen, die an den Karosserie-Abstützstellen mittels Schraub- oder Schweiß-Verbindungen befestigt sind. Derartige Befestigungsstellen sind korrosionsgefährdet und müssen bei wahlweisem Einbau unterschiedlich großer Kühler unterschiedliche Befestigungsstellen an der Karosserie aufweisen. Dies erfodert sowohl bei der Erst-Montage als auch bei evtl. Umrüstung eine jeweils unterschiedliche Ausbildung bzw. eine schwierige Umrüstung der Befestigungsstellen.

Aufgabe der Erfindung ist es, die vorbeschriebenen Schwierigkeiten zu vermeiden und die Kühler-Befestigung so auszubilden, daß sowohl Korrosionsgefährdung weitestgehend vermieden wird als auch der wahlweise und nachträgliche Einbau unterschiedlich großer Kühler ohne Umrüstung der Karosserie-Befestigungsstellen möglich ist.

Zur Lösung dieser Aufgabe sieht die Erfindung bei der eingangs beschriebenen Bauart einer Kühler-Befestigung die kennzeichnenden Merkmale des Patentanspruches 1 vor. Auf diese Weise können unterschiedlich bemessene Konsolen an den Karosserie-Abstützstellen in einfachster Handhabung lagegesichert befestigt und verrastet sowie verspannt werden und unterschiedlich große Kühler ohne weitere Bauteile und Umrüstmaßnahmen mittels dieser Konsolen wahlweise und auch nachträglich befestigt werden. Die weitestgehend flächige Auflage der Kunststoff-Konsolen an den Karosserie-Abstützstellen schließt eine Korrosionsgefährdung dieser Befestigungsstellen weitestgehend aus.

Weitere, die Erfindung weiterbildende Merkmale enthalten die Patentansprüche 2 bis 5. Diese Merkmale ergeben eine besonders einfache Handhabung beim Zusammenbau der Kühler-Befestigung, ermöglichen den Ausgleich der bei Serienfertigung unvermeidbaren Maßtoleranzen und ermöglichen die Einstellung einer vorbestimmten Vorspannung an den oberen Konsolen.

In der Zeichnung ist ein Ausführungsbeispiel der Erfindung dargestellt. Es zeigen:

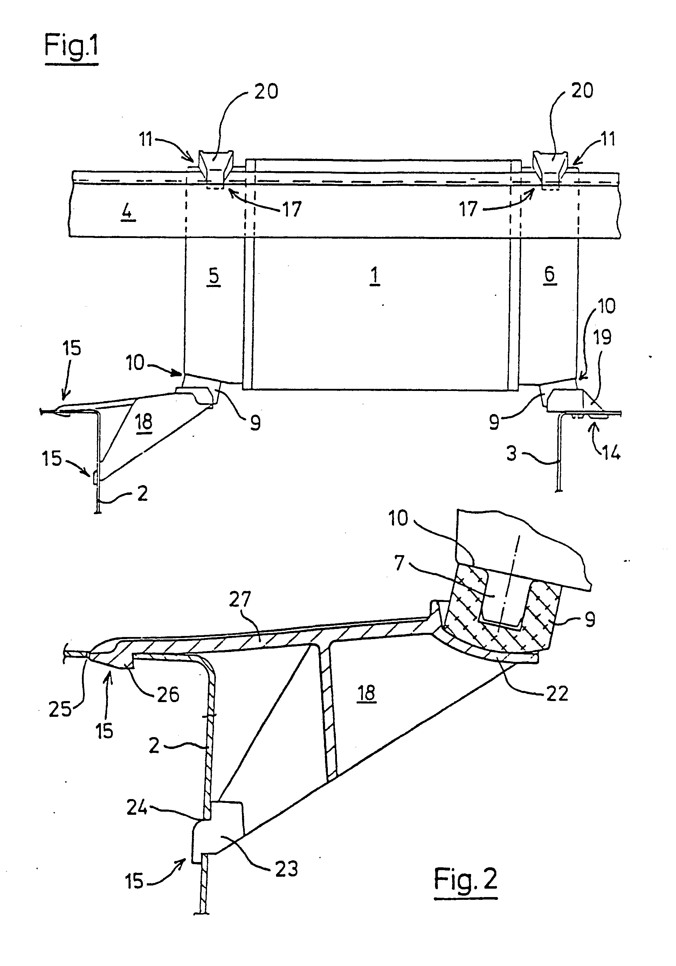

Fig. 1 eine Kühler-Befestigung an Karosserie-Längs- und -Quer-Trägern eines Kraftfahrzeuges in Stirnansicht,

Fig. 2 eine untere Karosserie- und Kühler-Abstützstelle im Schnitt,

Fig. 3 eine weitere untere Karosserie- und Kühler-Abstützstelle im Schnitt,

Fig. 4 eine obere Karosserie- und Kühler-Abstützstelle im Schnitt und

Fig. 5 eine Abwandlung der Abstützstelle nach Fig. 4 im Schnitt.

Ein Kühler 1 für eine nicht dargestellte Brennkraftmaschine ist an beiderseitigen unteren Längsträgern 2 und 3 sowie an einem oberen Querträger 4 der Karosserie eines nicht dargestellten Kraftfahrzeuges befestigt. Den beiderseitigen Wasserkästen 5 und 6 des Kühlers 1 sind unten je ein Aufnahmezapfen 7 und 8 für je ein pufferförmiges elastisches Lagerelement 9 angeformt, das sich jeweils gegen eine ebene ringförmige Abstützfläche als untere Kühler-Abstützstellen 10 abstützt. Als obere Kühler-Abstützstellen 11 sind den Wasserkästen 5 und 6 je eine nach oben offene Aussparung als Abstützfläche 12 angeformt, die je ein elastisches Lagerelement 13 aufnehmen.

Zwischen den unteren und oberen elastischen Lagerelementen 9 bzw. 13 und jeweils zugeordneten unteren und oberen Karosserie-Abstützstellen 14 und 15 bzw. 16 und 17 an den unteren Längsträgern 2 und 3 bzw. am oberen Querträger 4 ist je eine Konsole 18, 19 und 20 bzw. 21 angeordnet. Diese Konsolen 18 bis 21 bestehen jeweils aus einem einteiligen Kunststoff-Formteil aus faserverstärktem hochfestem Kunststoff. Jede Konsole 18, 19, 20 bzw. 21 ist mittels einer Dreipunktauflage unter eigener elastischer Vorspannung und/oder unter elastischer Vorspannung der gesamten Befestigungs-Anordnung jeweils mit den beiden Karosserie-Abstützstellen 14 bzw. 16 und 17 als Zweipunktauflage und der Kühler-Abstützstelle 10 bzw. 11 verbunden. Eine der beiden Karosserie-Abstützstellen 14, 15, 16 und 17 jeder Konsole ist dabei als Verrastung derart ausgebildet, daß sich in Verbindung mit der Gesamtausbildung der Konsole und der jeweils zweiten Abstützstelle eine elastische Vorspannung der Konsole zur Sicherung ihrer Befestigung an den Karosserie-Abstützstellen ergibt.

Den unteren Konsolen 18 und 19 ist für die Abstutzung des Lagerelementes 9 je eine pfannenförmige nach oben offene Aufnahme 22 angeformt. Für die verrastete Befestigung der unteren Konsole 18 an den Abstützstellen 15 am Längsträger 2 ist dieser Konsole eine untere Einrast-Auflage 23 angeformt, die eine Verrastöffung 24 im Langsträger 2 hintergreift und weitgehend spielfrei ausfüllt. Zur Stabilisierung der Konsole 18 ist die untere Abstützstelle in Längsrichtung des Längsträgers 2 mit ausreichendem Abstand zweifach hintereinander angeordnet. Die obere Abstützstelle 15 der Konsole 18 ist gleichfalls mit einer hakenartigen 25 auf der Oberseite des Längsträgers 2 und mit einer hakenartigen Rastnase 26 der Konsole 18 versehen, die am freien Ende eines elastischen Armes 27 der Konsole 18 angeordnet ist. Die Zuordnung dieser Bauteile ist maßlich so abgestimmt, daß sich beim Einrasten der Rastnase 26 eine unter Vorspannung stehende Befestigung der Konsole 18 am Längsträger 2 ergibt.

Die Karosserie-Abstützstellen 14 für die Konsole 19 bestehen gleichfalls aus zwei Verrastöffnungen 28 und 29 in der Oberseite des Längsträgers 3. Der Konsole 19 sind Verrastungselemente 30 und 31 angeformt, die in die Verrastöffnungen 28 und 29, diese voll ausfüllend eingreifen und unter Vorspannung verrasten. Die Konsole 19 liegt auf der Oberseite des Längsträgers 3 derart flächig auf, daß eine allseits stabile Abstützung des Kühlers 1 an der Abstützstelle 14 gewährleistet ist.

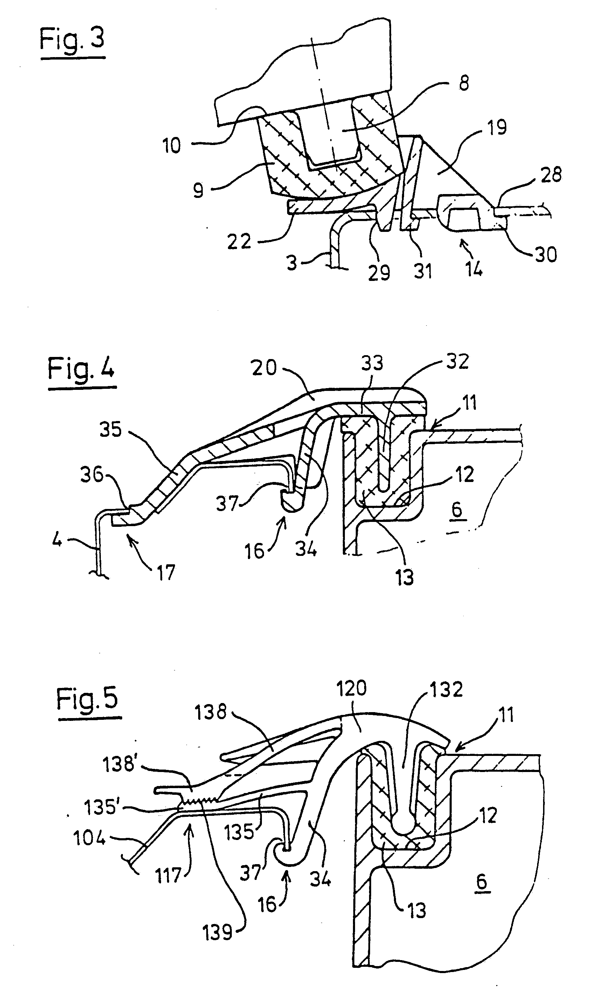

Die obere Konsole 20 nach Fig. 4 greift mit einem zungenförmigen Fortsatz 32 lagesichernd in eine entsprechende Öffnung im Lagerelement 13 ein. Der Fortsatz 32 ist allseits mit einer Auflagefläche 33 zwischen Konsole 20 und Lagerelement 13 umgeben. Ausgehend von der Auflagefläche 33 erstreckt sich die Konsole 20 mittels je eines Stützarmes 34 und 35 zu den Karosserie-Abstützstellen 16 bzw. 17. Die Elastizität der Stützarme 34 und 35 bewirkt die Vorgespannte Befestigung der Konsole 20 einerseits in einer vom Ende des Stützarmes 35 Weitgehend spiel frei durchdrungenen und hintergriffenen Verrastöffnung 36 im Querträger 4 und die Verrastung des hakenförmigen Endes des Stützarmes 34 mit einer Begrenzungskante 37 des Querträgers 4. Die elastische Vorspannung der Konsole 20 bewirkt zudem auch eine elastische Vorspannung des Lagerelementes 13 und damit den Ausgleich von Fertigungstoleranzen im Bereich der Befestigung des Kühlers 1.

Die Konsole 120 nach Fig. 5 entspricht im wesentlichen der Ausbildung der Konsole 20 nach Fig. 4. Abweichungen bestehen in der Ausbildung des zungenförmigen Fortsatzes 132 mit einem zylindrischen Endbereich, der in Verbindung mit einem Bewegungsspiel im Lagerelement 113 ein Verschwenken der Konsole 120 relativ zum Wasserkasten 6 zuläßt. Die zweite Abstützstelle 117 ist bei dieser Alternative flächig am Querträger 104 ausgebildet. Die Konsole 120 weist zur Abstützstelle 117 zwei besonders elastisch ausgebildete Stützarme 135 und 138 auf, die zur Abstützstelle 117 hin im spitzen Winkel zusammenlaufen und deren freie Enden 135' und 138' sich im Bereich der Abstützstelle 117 über je eine Verzahnung 139 in ihrer Vorspannung verstellbar gegeneinander abstützen.

Die beschriebene Kühler-Befestigung für Brennkraftmaschinen, insbesondere in Kraftfahrzeugen, ermöglicht sowohl bei Neufertigung als auch bei nachträglicher Umrüstung den Einsatz unterschiedlicher Kühlergrößen allein durch Verwenden unterschiedlicher Konsolen zwischen unverändert bleibenden Abstützstellen an Karosserieteilen und am Kühler. Darüber hinaus wird durch das elastische Verrasten der Konsolen an den Karosserieteilen ohne metallische Befestigungsteile und Verbindungsstellen eine Korrosion an diesen Verbindungsstellen ausgeschlossen. Ferner ist der Zusammenbau der Kühler-Befestigung ohne Werkzeuge von Hand oder mittels Montage-Automaten einfach möglich und die Demontage erfordert lediglich ein einfaches Werkzeug, wie einen Schraubendreher, um jeweils den Verrastungseingriff der Konsolen zu lösen.

## Patentansprüche

1. Kühler-Befestigung für Brennkraftmaschinen, insbesondere in Kraftfahrzeugen,
   mit wenigstens einer oberen und/oder unteren Konsole (18, 19, 20 bzw. 120) zwischen Karosserie- und Kühler-Abstützstellen (10, 11, 14, 15, 16, 17 bzw. 117) und
   einem formschlüssig zwischen der Konsole und der Kühler-Abstützstelle (10 bzw. 11) zwischengeschalteten elastischen Lagerelement (9 bzw. 13),
   dadurch gekennzeichnet,
   daß die Karosserie-Abstützstelle (14, 15, 16, 17 bzw. 117) aus einer Abstütz-Fläche (117), -Kante (37) bzw. Verrastöffnungen (24, 25, 28, 29 bzw. 36) in einem Karosserie-Wandteil bzw. -Träger (2, 3, 4 bzw. 104) und
   die Konsole (18, 19, 20 bzw. 120) aus einem einteiligen Kunststoff-Formteil bestehen,
   wobei die Konsole mittels einer Dreipunktauflage mit einer Zweipunkt-Karosserie-Abstützstelle (14, 15, 16 und 17 bzw. 16 und 117) und einer einzigen Kühler-Abstützstelle (10) unter elastischer Vorspannung der Konsole und/oder der gesamten Befestigungs-Anordnung verbunden sowie an wenigstens einer Karosserie-Abstützstelle (14, 15 bzw. 16) verrastet ist.

2. Anordnung nach Anspruch 1 dadurch gekennzeichnet,
   daß einer unteren Konsole (18 bzw. 19) eine pfannenförmige, nach oben offene Aufahme (22) für ein am Kühler (1) befestigtes pufferförmiges Lagerelement (9) angeformt ist.

3. Anordnung nach Anspruch 1 oder 2, dadurch gekennzeichnet,
   daß die beiden Auflagen (23 und 26, 30 und 31, 34 und 35 bzw. 34 und 135) der Konsole (18, 19, 20 bzw. 21) zu den Karosserie-Abstützstellen (14, 15, 16, 17 bzw. 117) der Form der karosserieseitigen Abstutz-Fläche (117), -Kante (37) bzw. -Aussparung (24, 25, 28, 29 bzw. 36) für eine Lagesicherung und Verrastung der Konsole angepaßt sind.

4. Anordnung nach Anspruch 1 oder 3, dadurch gekennzeichnet,
   daß die Dreipunkt-Auflage der oberen Konsole (20 bzw. 120) an Karosserie- und Kühler-Abstützstellen (11, 16, 17 bzw. 117) maßlich derart abgestimmt ist, daß in Zusammenwirkung mit dem elastischen Lagerelement (13) eine elastische Vorspannung auf das Lagerelement (13) und dessen Abstützfläche (12) am Kühler (1) wirkt.

5. Anordnung nach Anspruch 4, dadurh gekennzeichnet, daß der Konsole (120) zwei im spitzen Winkel zu einer Karossorie-Abstützstelle (117) hin Zusammen laufende Stützarme (135 und 138) angeformt sind, deren freie Enden (135' und 138') sich im Bereich der Abstützstelle (117) über je eine Verzahnung (139) in ihrer Vorspannung verstellbar gegeneinander abstützen.

## Claims

1. A radiator securing system for internal combustion engines, especially in motor vehicles,
having at least one upper and/or lower bracket (18, 19, 20 or 120) between body support points and radiator support points (10, 11, 14, 15, 16, 17 or 117) and
an elastic bearing element (9 or 13) interposed in shapeengaging manner between the bracket and the radiator support point (10 or 11), characterised in that,
the body support point (14, 15, 16, 17 or 117) comprises a support surface (117), a support edge (37) and/or detent openings (24, 25, 28, 29 and/or 36) in a body wall part or carrier (2, 3, 4 and/or 104) and
the bracket (18, 19, 20 or 120) comprises a one-piece synthetic plastics material moulding,
while the bracket is connected by means of a three-point support system with a two-point body support point (14, 15, 16 and 17 or 16 and 117) and a single radiator support point (10) with elastic initial stressing of the bracket and/or of the entire securing arrangement and is detained on at least one body support point (14, 15 or 16).

2. An arrangement according to Claim 1, characterised in that an upwardly open reception part (22) of pan form is formed on a lower bracket (10 or 19) for a bearing element (9) of buffer form secured to the radiator (1).

3. An arrangement according to claim 1 or 2, characterised in that the two supports (23 and 26, 30 and 31, 34 and 35 or 34 and 135) of the bracket (18, 19, 20 or 21) for the body support points (14, 15, 16, 17 or 117) are adapted to the form of the support face (117), support edge (37) or support aperture (24, 25, 28, 29 or 36) on the body, for a securing of position and detention of the bracket.

4. An arrangement according to claim 1 or 3, characterised in that the three-point support system of the upper bracket (20 or 120) is adapted in dimension to body and radiator support points (11, 16, 17 or 117) in such a way that, in cooperation with the elastic bearing element (13), an elastic initial stress acts upon the bearing element (13) and its support face (12) on the radiator (1).

5. An arrangement according to claim 4, characterised in that on the bracket (120) there are formed two support arms (135 and 138) converging at an acute angle to a body support point (117), the free ends (135' and 138') of which arms are supported against one another in the region of the support point (117) adjustably in their initial stress each through a toothed portion (139).

## Revendications

1. Fixation de radiateur de moteurs à combustion interne, en particulier de véhicules automobiles, comportant au moins une console supérieure et/ou inférieure (18, 19, 20 ou 120) entre des points d'appui (10, 11, 14, 15, 16, 17, ou 117) entre carrosserie et radiateur et un point d'appuis une pièce support sans glissement (9 et 13) élastique intercalée entre les points d'appui de la console et du radiateur (10, 11) caractérisé en ce que les points d'appui de la carrosserie (14, 15, 16, 17, ou 117( sont constitués d'une surface d'appui (117) de bordures (37) ou d'ouverture d'enclenchement (24, 25, 29 ou 36) dans une paroi ou une traverse (2, 3, 4 ou 104) de la carrosserie, et les consoles (18, 19, 20 ou 120) sont constituées d'une pièce moulée d'un seul morceau en matière synthétique, où la console est enclenchée au moyen d'un support en trois points avec un point d'appui de la carrosserie en deux points (14, 15, 16, et 17 ou 117) et un des quelques points d'appui du radiateur sont reliés par une précontrainte élastique de la console et/ou au système de fixation ainsi qu'à au moins un point d'appui de la carrosserie (14, 15 ou 16).

2. Système selon la revendication 1, caractérisé en ce que sur une console (18 ou 19) est formée une cavité (22) en forme de poche ouverte vers le haut pour une pièce de support (9) formant amortisseur fixée sur le radiateur (1).

3. Système selon la revendication 1 ou 2, caractérisé en ce que les deux supports (23 et 26, 30 et 31, 34 et 35) des consoles (18, 19, 20 et 21) sont adaptés aux points d'appui de la carrosserie (14, 15, 16, 17 ou 117) à la forme de la surface d'appui (117) du côté carrosserie, aux bordures (37) ou à la cavité (24, 25, 28, 29, ou 36) pour assurer la position et enclencher la console.

4. Système selon la revendication 1 ou 3, caractérisé en ce que le support en trois points de la console supérieure (20 ou 120) sur les points d'appui de la carrosserie et du radiateur (11, 16, 17 ou 117) est déterminé dans ses dimensions de telle sorte que, en coopération avec la pièce de support élastique (13) une précontrainte élastique agit sur la pièce support (13) et sa surface d'appui (12) sur le radiateur (1).

5. Système selon la revendication 4, caractérisé en ce que sur la console (120) sont formés deux bras d'appui (135, 138) concourant sous un angle aigu vers le point d'appui de la carrosserie (117) dont les extrémités libres (135' et 138') s'appuient mutuellement de façon réglable en précontrainte dans la zone du point d'appui (117) sur des dents.

## Fig.1

20    20

11    11

17    17

4

5    1    6

10    19

15    10

18    9    9

15    3    14

2

10

7

27    9

26    22

25    18

15

2

24

23

15    Fig. 2

Fig. 3

Fig. 4

Fig. 5